Europäisches Patentamt

(19) European Patent Office

Office européen des brevets

(11) Publication number: **0 051 364**
**A2**

(12) **EUROPEAN PATENT APPLICATION**

(21) Application number: **81304655.4**

(22) Date of filing: **07.10.81**

(51) Int. Cl.³: **F 02 M 29/04**
**F 02 M 29/06**

(30) Priority: **24.10.80 NZ 195360**

(43) Date of publication of application:
**12.05.82 Bulletin 82/19**

(84) Designated Contracting States:
**AT BE CH DE FR GB IT LI LU NL SE**

(71) Applicant: **Walker, Frank Graeme Benson**
**44 Greers Road**
**Christchurch(NZ)**

(72) Inventor: **Walker, Frank Graeme Benson**
**44 Greers Road**
**Christchurch(NZ)**

(74) Representative: **Williams, Trevor John et al,**
**J.A. KEMP & CO. 14 South Square Gray's Inn**
**London WC1R 5EU(GB)**

(54) Fuel/air mixing using swirl chamber.

(57) An air/fuel homogenising means for use downstream of a carburettor and upstream of the intake to an internal combustion engine more effectively to homogenise and/or otherwise assist the entrainment of the fuel in the air stream from the carburettor. The homogenising means comprises a swirl chamber into which the air/fuel mix enters (at 7) tangentially of the swirl to be created therein and from which it exits (at 9) axially of the swirl created therein. The boundary (11) or at least a portion thereof against which the swirling fuel/air mix impinges or passes is heated to a temperature above ambient temperature or at least the temperature of the fuel/air mix to assist in vapourisation. Such heating is preferably carried out with the use of a fluid jacket (6) which receives either exhaust gases or coolant from the engine.

FIG.4

- 1 -

## FUEL/AIR MIXING USING SWIRL CHAMBER

### BACKGROUND TO THE INVENTION

Many forms of fuel system have been devised to enhance the degree of homogenity of entrainment of a liquid fuel in the air stream for feeding to an internal combustion engine. Such systems can include means for heating a fuel and/or air or can include devices for providing a turbulent flow in the air/fuel flow e.g. a mesh or the like barrier through which the fuel must travel in a turbulent flow to thus ensure a better homogenity of the air/fuel mix. Such systems however have the defect in that while they work to some extent with a volatile fuel such as petrol they do not lend themselves readily to a less volatile liquid fuel such as methanol. Obviously also any system that works well with a less volatile fuel without any significant impairment on the air flow may also have application in a petrol powered engine.

It is therefore an object of the present invention to provide means and/or methods which will go at least someway to meet the abovementioned desiderata or which will at least provide the public with a useful choice.

### SUMMARY OF THE INVENTION

In one aspect the invention consists in air/fuel homogenising means for use downstream of an air/fuel mixing device such as a carburettor and upstream of the intake to an internal combustion engine to more effectively homogenise the entrainment of the fuel in the air stream from said air/fuel mixing device, said means comprising

means defining a swirl chamber having at least one entrance thereto and at least one exit therefrom so arranged that the air/fuel mix enters said at least one entrance substantially tangentially of the swirl to be created or substantially tangentially of the swirl to be created or being created in said swirl chamber and exits via said at least one exit in a direction substantially along the swirl axis and from substantially at the centre of said swirl, and

means to provide at least a portion of the boundary of said swirl chamber against which the fuel/air mix will impinge with a temperature above ambient temperature to thereby assist in the vapourisation of particles of fuel which under centrifugal forces impact or pass adjacent to such a hot boundary.

Preferably the portion of the boundary of said boundary that is to be or is heated in use is a region substantially circularly disposed about said swirl axis.

Preferably said means to provide at least part of the boundary of said swirl chamber with an elevated temperature is fluid jacketed, the fluid jacket having an entrance thereinto into which a fluid at elevated temperature can enter and an exit from which the fluid can exit after having by heat transfer heated said boundary.

Preferably said entrance and said exit from said fluid jacket include outstanding spigot means to facilitate the attachment of coolant water hose from the coolant system of a motor vehicle.

Preferably said means providing said swirl chamber and said means in use to heat at least part of the boundary surface of said swirl chamber are formed as a two part mouldin assembly which two parts are joined together and held against separation in a direction substantially parallel to said swirl axis.

In a further aspect the present invention consists in a method of homogenising to a greater degree the entrainment of a liquid in an air stream which comprises injecting the liquid/air stream into a swirl chamber having a substantially circular swirl chamber boundary surface in a direction radially outwardly from the axis of the swirl to be created, the air/liquid mix being injected substantially tangentially with respect to the substantially circular boundary and allowing the same to exit in a direction parallel to the swirl axis from a region substantially centrally of the swirl generated by the air/liquid injection, at least a part of said substantially circular boundary being at an elevated temperature with respect to the initial liquid/air stream temperature and/or the ambient temperature.

In a further aspect the present invention consists in in combination an internal combustion engine, an air/fuel homogenising means in accordance with the present invention upstream of the internal combustion engine and a carburettor device upstream of said swirl device, the arrangement being such that in use the air/fuel mix from the carburettor must pass through the swirl chamber prior to passing on into the engine.

In yet a further aspect the present invention consists in an air/fuel feed to an internal combustion engine at least one air/fuel homogenising means interposed between the intake valves of the engine and the air/fuel mixing means, such as a carburettor or carburettors, and forming part of the manifold conduiting between said intake valve(s) and said air/fuel mixing means, said air/fuel homogenising means creating a swirl in the air/fuel flow to thereby centrifugally cause the flow to pass against a heated boundary before continuing on to the valve(s) from at or adjacent the swirl axis.

- 4 -

Preferably said boundary is heated by a jacketed flow of a heated fluid selected from exhaust gas and liquid coolant of the engine.

Preferably the fuel is methanol.

BRIEF DESCRIPTION OF THE DRAWINGS

One preferred form of the present invention will now be described with reference to the accompanying drawings in which

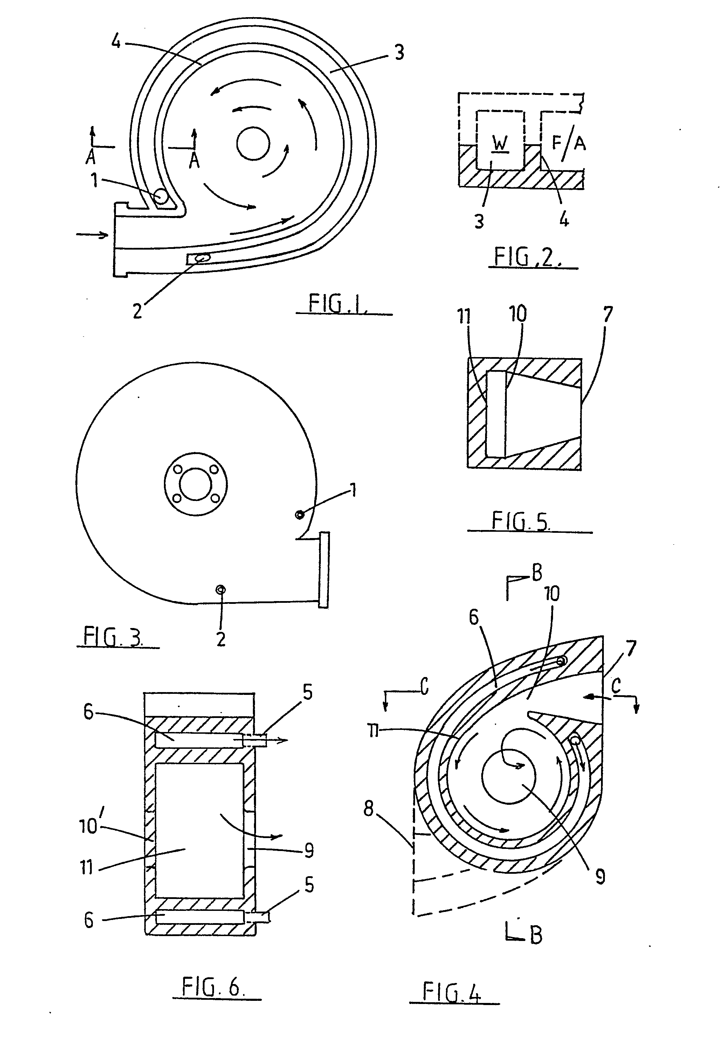

Figure 1 is a plane view of one half of two mouldable components capable of being combined to provide the preferred swirl chamber, the drawing showing that half which includes an inlet and outlet for water in the chanel external of the boundary defining the substantially circular, oval or the like boundary of the swirl chamber, such inlet and outlet leading to a spigot or the like arrangement on the other side thereof to which pressure hose or the like can be fixed by, for example, hose clips, figure 1 also showing with the arrows the tangential intake of an air fuel mix into the swirl chamber and the progressive swirling thereof towards the central outlet opening, it thus being appreciated that heavier particles of fuel will impact more on the boundary than would be the case if they were perfectly entrained,

Figure 2 is a sectional view AA of the component shown in figure 1, the dotted outline showing how a complementary housing which ideally would not include inlet and outlets for the water jacket (but which in an alternative form could include one if the other did not include both) the figure also showing denoted by reference W the thus defined liquid tight conduit or jacket through which hot coolant water can pass, the letters F/A showing the boundary of the swirl chamber which is in conductive contact with the water W,

Figure 3 is a view of the other side of the member shown in figure 1 showing how the inlet which is preferably tangential includes means for the clamping of the same to the manifold or at least part of the carburettor and also showing how the central outlet would preferably include some means (eg a circular flange with bolt holes) for clampling to the intake manifold of the engine proper,

Figure 4 is a similar view to figure 1 but is a section of a more preferred configuration showing how the air/fuel mixture inlet port can be constricted in the direction shown in figure 4 but can be extended at the constriction in the plane of the drawing, i.e. fish tailed so as to provide a larger area of air/fuel mixture contact about the jacketed boundary, figure 4 also showing with the dotted lines how if desired two air/fuel inlets can be provided to a common swirl chamber having one or two axial exits therefrom, it being realised of course where a single swirl chamber is to be used the swirl induced by each tangential inlet should reinforce that of the other,

Figure 5 is a partial section in the direction C-C with respect to figure 4 showing the fish tailing of the constriction of the entrance which casts the air/fuel mix over a wider locus about the circular boundary of the swirl chamber,

Figure 6 is a section B-B with respect to figure 4 showing on the right hand side the spigots for the fluid jacket (preferably for coolant water although usable also with exhaust gases), the figure showing the two part moulding which can be mated with appropriate gaskets and held against a tendency to move in the axial direction with respect to the swirl to be induced, the figure also showing dotted in how a second outlet port can be provided if desired,

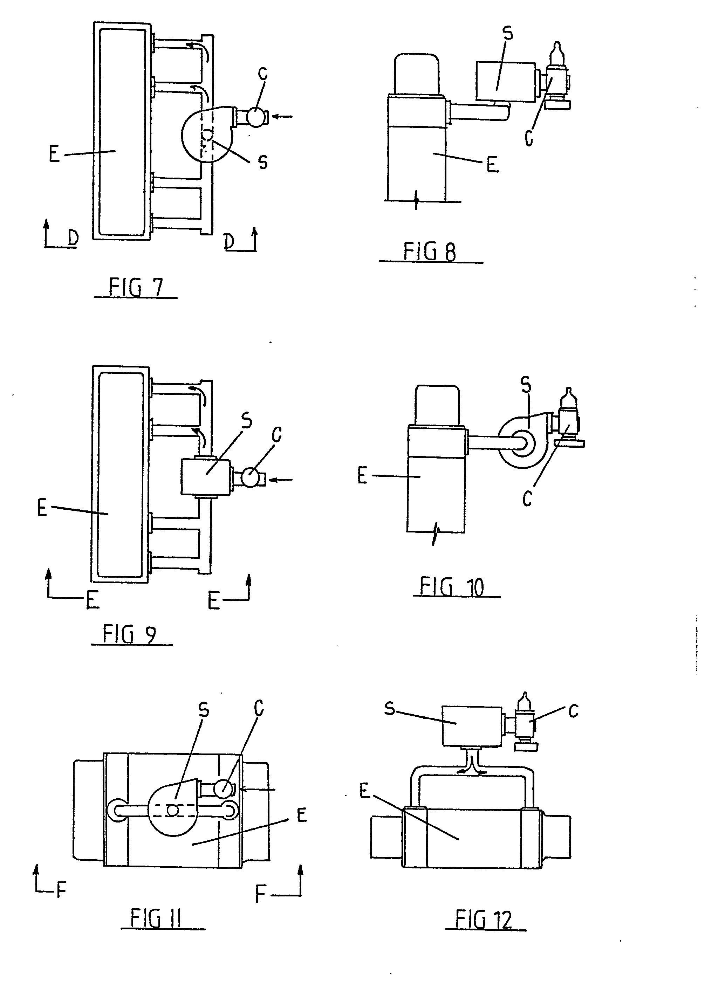

Figure 7 shows from above a view of an inline four cylinder engine with a standard manifold having a swirl chamber mounted thereon such that the air/fuel mix from a carburettor passes into the swirl chamber through a single entrance and exits downwardly into the manifold and can thus lead to the top two cylinders as well as the bottom two cylinders depending of course on the firing sequence and thus intake valve opening sequence of the engine,

Figure 8 is a view D-D of the arrangement shown in figure 7,

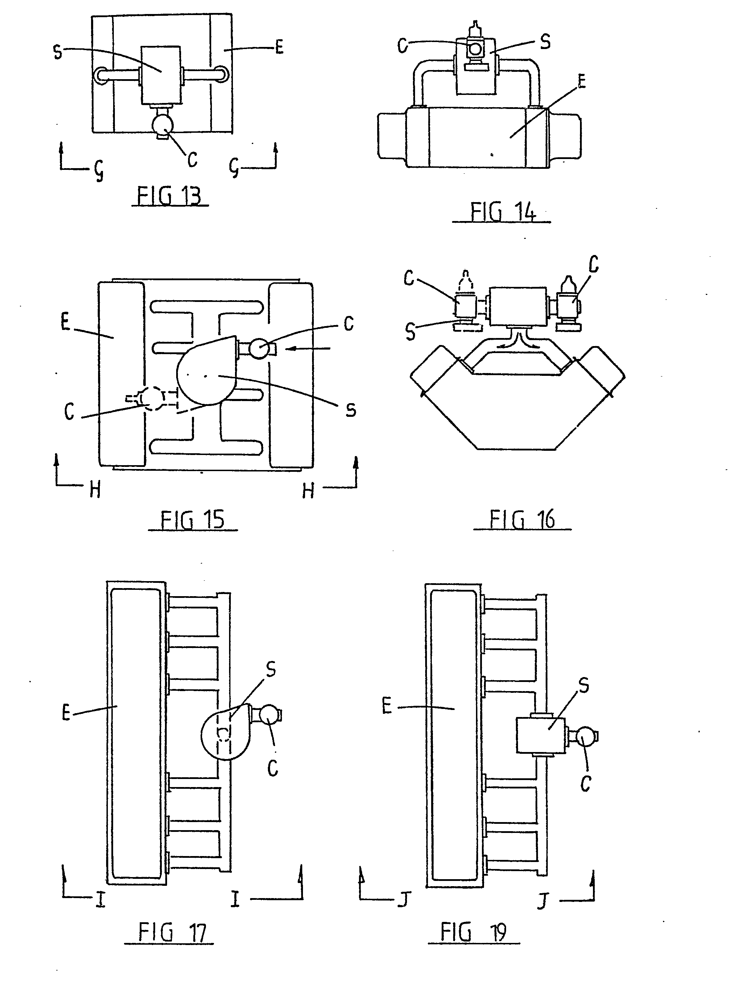

Figure 9 is a similar view to that of figure 7 but this time of an inline four cylinder engine having a swirl chamber interposed on the manifold such that two exits from the swirl chamber are provided so that each exit feeds from the swirl (created by a single entrance from a carburettor) and can direct the flow to any cylinder with which it is in communication,

Figure 10 is a view E-E of the arrangement shown in figure 9,

Figure 11 is a plan view similar to that of figures 7 and 9 but this time of an opposed four or six cylinder engine having a standard manifold showing how a single entrance swirl chamber can provide with a single exit therefrom for all of the cylinders,

Figure 12 is a view F-F of the arrangement shown in figure 11,

Figure 13 is a similar view to that of figure 11 but showing an opposed four or six cylinder engine with a non-standard manifold which allows a swirl chamber having two exits to be interposed on the manifold,

Figure 14 shows the arrangement of figure 13 in the direction G-G,

Figure 15 is a similar view to figures 7, 9, 11 and 13 but this time of an arrangement for a V6 or V8 engine showing how the swirl chamber can be arranged to create a swirl about a vertical axis using one or two swirl chamber entrances (depending on whether there are one or two carburettors) and showing how the same exits downwardly into the common manifold,

Figure 16 is a view H-H, the arrangement of figure 15,

Figure 17 is a similar view to figures 7, 9, 11, 13 and 15 but this time showing an arrangement for an inline six cylinder engine having a standard manifold, the arrangement showing a single carburettor feeding an air/fuel stream into the swirl chamber to create a swirl about a vertical axis which then exits downwardly into the manifold so that the flow passes as required to one of the six cylinders,

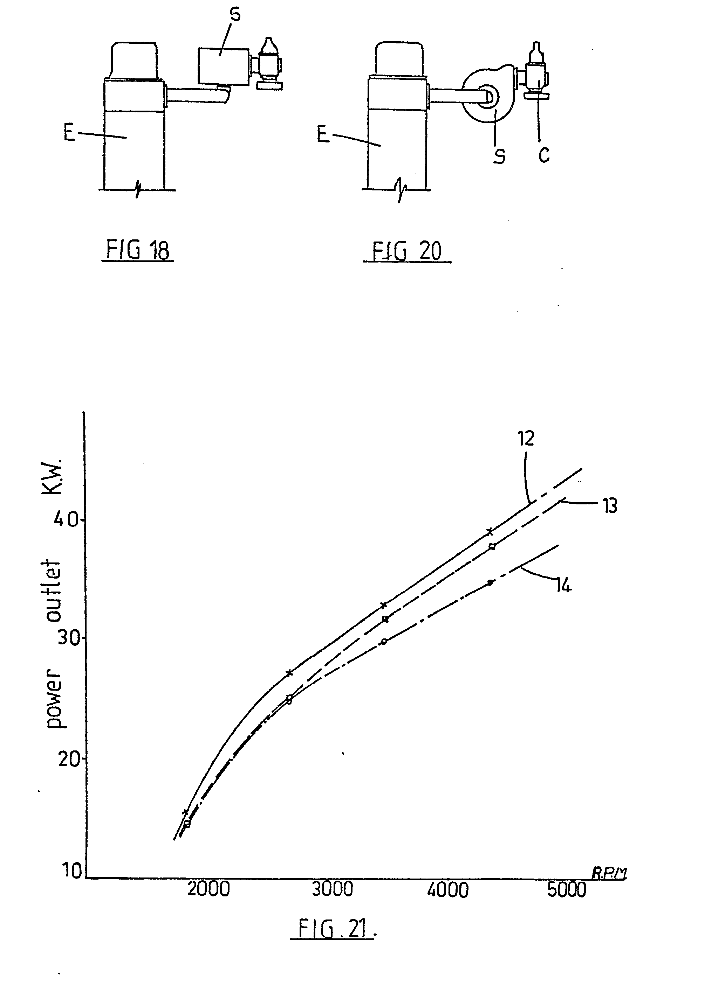

Figure 18 is a view I-I of the arrangement shown in figure 17,

Figure 19 is a similar view to figure 17 but showing the inline six cylinder engine with a non-standard manifold which enables a two exit swirl chamber in accordance with the present invention to be interposed on the manifold so that each exit supplies as required air/fuel to whatever cylinder is firing, it being appreciated of course that with one cylinder at a time being fired that the bulk of the air/fuel mix in the swirl chamber would normally exit out one or other of the exits depending on the demands created by the vacuum created when a piston is being moved after the intake valve to that particular cylinder has been opened,

Figure 20 is a view J-J of the arrangement shown in figure 19,

Figure 21 is a graph of power output in kilowatts against revs per minute (rpm) in respect of a Toyoto Corolla 1300 cc engine with the solid top line being for a standard engine on petrol, the next line down being for the modified engine when running on methanol using an SU type constant depression carburettor feeding to a heat unit substantially of a type as shown in figures 1 to 7, the third line being the line showing the operation of the same engine modified to include the swirl chamber and the SU carburettor when operated on petrol thereby showing the slight losses on petrol efficiency that arise through the constrictions on air/fuel flow owing to passage through the swirl chamber and also owing to the leaner mixes for which the engine and carburettor was set, and

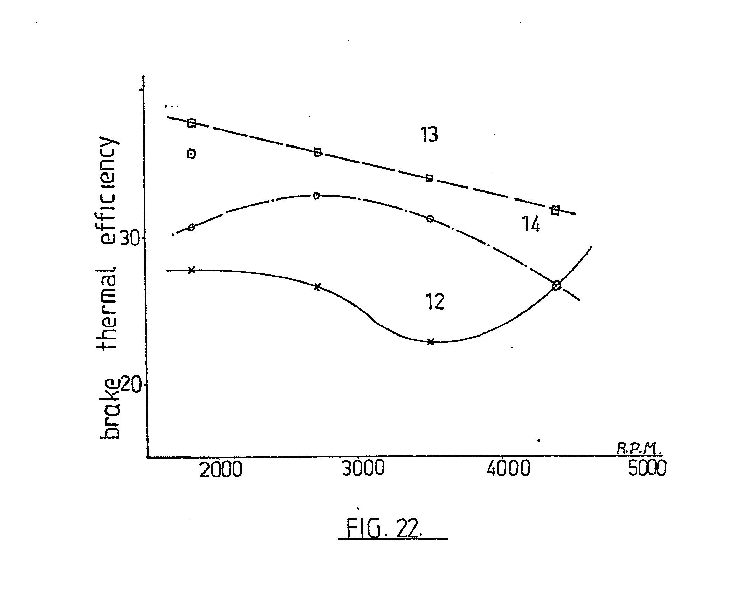

Figure 22 is a graph of brake thermal efficiency against RPM at WOT (wide open throttle).

DETAILED DESCRIPTION

In one preferred form of the present invention the apparatus would consist simply of a two part arrangement of the kind envisaged having regard to the drawing in its assembled state. In one form of the invention hot coolant water would pass in an inlet 1 out of the outlet 2 after having passed around the channel 3 which provides the conduit W previously mentioned. By thus heating the boundary 4 it becomes clear that fuel mix entering tangentially will have the heavier particles of fuel running about the boundary 4 thus being heated to vapourise the same thereby leading to their better entrainment in a homogeneous manner in the fluid stream.

Preferably the arrangement is such that the vertical extent of the swirl chamber in a direction along the swirl axis which also preferably includes the outlet axis is minimised to reduce the vortex nature of the swirl thus maximising the likelihood that heavier particles must contact the boundary in surface 4.

Figures 4 to 6 show the preferred form of swirl chamber for the application in a situation as depicted in figures 7 and 8 for for example a Toyota Corolla which as it happens is the type of vehicle and type of arrangement from the data hereinafter referred to was obtained.  Figure 6 clearly shows the preferred spigots 5 to the water jacket 6 and also shows how if desired in addition to entrance 7 an additional entrance or entrances 8 can be provided which will reinforce the swirl. Of course entrances 7 and 8 if provided could be located at different points along the axial length of the swirl to be created in the chamber.  The provision of a second inlet is depicted diagrammatically in figure 15 and 16 for a twin carburettor V8 arrangement. In that arrangement a single outlet 9 was employed. Obviously however irrespective of how many entrances are provided there is the prospect of a second exit at for example 10.  Such a second exit would be required with any of the configurations depicted in figures 9 and 10, 13 and 14, and 19 and 20.  Figure 5 shows how the constriction 10 of the entrance 7 of figure 4 is in fact fish tailed so that the cross-sectional area at for example the mouth of the entrance 7 is substantially the same as at the so called "constricted" region 10. Such a changing of shape however has the effect of providing a larger boundary surface 11 at which heat transfer can take place.

Figures 7 to 20 are largely self-explanatory.  For explanation the engine will be referenced with the letter E, the swirl chamber or heat unit with the letter S and the carburettors or carburettor with the letter C.

Figure 21 is a graph showing power output in kilowatts against rpms (revolutions per minute) at WOT. The engine involved was a Toyota Corolla 1300 cc engine. The line 12 is for a standard Corolla engine on petrol. Line 13 is for the modified engine on methanol, i.e. an SU type constant depression carburettor in conjunction with a swirl chamber of the kind depicted in figures 1 to 6 arranged as shown in figure 7 and 8, and line 14 is for the same modified engine but operated at the same carburettor settings on petrol.

Figure 22 gives for the same engine the wide open throttle brake thermal efficiencies against RPM with references 12, 13 and 14 as before.

It can be seen therefore that a modified engine in accordance with the present invention may give rise to slight losses of power when operated on petrol but gives no significant power losses on methanol. Indeed since the unit is likely to be marketable only in a dual fuel form the fact that the alternative fuel if methanol affords no appreciable power losses is of great significance. The constant depression carburettor used was a standard $1^3/4$ inch SU carburettor. The conclusions of the tests on the test vehicle where as follows:

(1) A marginal power loss of 3.7% occurs in operation of the engine with the heat unit and SU carburettor on methanol as compared with the original engine on petrol.

(2) A slightly more significant power loss of 12% occurs in operation of the modified engine when operated on petrol. This can be lowered if the swirl chamber is not heated.

(3) A significant increase in brake thermal efficiency occurs with the use of the methanol and the heat unit, the maximum recorded at WOT increasing from 27.8% to 37.7% whilst the maximum recorded at any operating condition increased from 31.1% to 37.8%.

(4) An average increase in brake thermal efficiency occurs on petrol with the use of the heat unit, the maximum recorded level increasing from 31.1% to 32.6%.

(5) The peak thermal efficiencies achieved and the sustained higher efficiencies evident at wider throttle openings indicated a factor such as charge stratification rather than simple improved vapourisation of the fuel owing to the significant improvement in brake thermal efficiencies.

(6) . No significant manifold distribution improvement was evident from the tests.

(7) No effects detrimental to the life of the engine were evident from the tests.

The use of methanol as a fuel in engines and engine ancillaries designed originally for petrol operation is reported to cause problems in the area of mixture distribution, bore washing and oil dilution and drivability. These can all be at least partly attributable to the high latent heat of vapourisation of methanol, this being 3.3 times that of petrol on a weight basis and over 7 times that of petrol on a net callorific value basis. Addition of sufficient heat to obtain full or nearly full vapourisation of the fuel may overcome these problems to a large degree but in view of the quantities involved (up to 8 kilowatts in a 1300 cc Corolla engine) may not be very easy to obtain or control at a reasonable conversion cost. Instead the present invention may achieve a degree of fuel atomisation and mixture homogenity to match a lower degree of vapourisation for satisfactory engine operation. This is because with the test vehicle insufficient heat for total fuel vapourisation under all engine operating conditions was supplied but nevertheless the apparatus did appear to carry out the function of providing sufficient vapourisation, atomisation and adequate mixture. The percentage of heat addition with the system of the present invention relative to total evaporative requirements gradually falls off as the fuel/air flow rises which in itself is a desirable characteristic from a volumetric efficiency power output view. Obviously with the system of the present invention the air flow rate at wide open throttle was reduced mainly owing to the tortuous path. This of course can be improved by better attention to the design of the surfaces involved and the avoidance of heat transfer features such as vanes, fins etc. which may otherwise be a desirable feature in the swirl chamber or on the boundary thereon.

It is believed therefore that the present invention will find widespread acceptance in situations where a fuel of low volatility such as methanol has to be used. It will also have wide spread usage where a dual fuel situation is required which involves a poorly volatile fuel such as methanol or other alcohol and also a more volatile fuel such as petrol.

-13-

CLAIMS:

1. An air/fuel homogeniser for use downstream of an air/fuel mixing device such as a carburettor and upstream of the intake to an internal combustion engine more effectively to homogenise the entrainment of the fuel in the air stream from said air/fuel mixing device, said homogeniser being characterised by a swirl chamber having at least one entrance (7) thereto and at least one exit (9) therefrom so arranged that the air/fuel mix enters said at least one entrance substantially tangentially of the swirl to be created or being created in said swirl chamber and exits via said at least one exit in a direction substantially along the swirl axis and from substantially at the centre of said swirl, and means (1,2,3 or 6) to provide at least a portion (11) of the boundary of said swirl chamber against which the fuel/air mix will impinge with a temperature above ambient temperature thereby to assist in the vapourisation of particles of fuel which under centrifugal forces impact or pass adjacent to such a hot boundary.

2. An air/fuel homogeniser as claimed in claim 1, characterised in that the portion (11) of the boundary of said boundary that is to be or is heated in use is a region substantially circularly disposed about said swirl axis.

3. An air/fuel homogeniser as claimed in claim 1 or claim 2, characterised in that said means to provide at least part of the boundary of said swirl chamber with an elevated temperature is a fluid jacket (3 or 6), the fluid jacket having an entrance (2 or 5) thereinto into which a fluid at elevated temperature can enter and an exit (3 or 5) from which the fluid can exit after having by heat transfer heated said boundary.

4. An air/fuel homogeniser as claimed in claim 3, characterised in that said entrance and said exit from said fluid jacket include outstanding spigots (5) to facilitate the attachment of coolant water hose from the coolant system of a motor vehicle.

5. An air/fuel homogeniser as claimed in any one of the preceding claims, characterised in that the swirl chamber and said means in use to heat at least part of the boundary surface of said swirl chamber are formed as a two part moulding assembly which two parts are joined together and held against separation in a direction substantially parallel to said swirl axis.

6. A method of homogenising to a greater degree the entrainment of a liquid in an air stream which is characterised by injecting the liquid/air stream into a swirl chamber having a substantially circular swirl chamber boundary surface (4,11) in a direction radially outwardly from the axis of the swirl to be created, the air/liquid mix being injected substantially tangentially with respect to the substantially circular boundary and allowing the same to exit in a direction parallel to the swirl axis from a region substantially centrally of the swirl generated by the air/liquid injection, at least a part of said substantially circular boundary (4 or 11) being at an elevated temperature with respect to the initial liquid/ air stream temperature and/or the ambient temperature.

7. A method as claimed in claim 6, characterised in that the liquid is methanol.

8. An internal combustion engine comprising a carburettor and characterised by an air/fuel homogeniser as claimed in any one of claims 1 to 5 located downstream of the carburettor whereby air/fuel mix from the carburettor must pass through the swirl chamber prior to passing on into the engine cylinders for combustion.

-15-

9. An air/fuel feed to an internal combustion engine comprising at least one air/fuel homogeniser interposed between the intake valves of the engine and the carburettor or carburettors, and forming part of the manifold conduiting between said intake valve(s) and said carburettor(s) characterised in that said air/fuel homogeniser is adapted to create a swirl in the air/fuel flow thereby centrifugally to cause the flow to pass against a heated boundary (4 or 11) before continuing on to the valve(s) from at or adjacent the swirl axis.

10. A feed as claimed in claim 8 characterised in that said boundary is heated by a jacketed flow of a heated fluid selected from exhaust gas and liquid coolant of the engine.

FIG.1.

FIG.2.

FIG.3.

FIG.4.

FIG.5.

FIG.6.

FIG 7

FIG 8

FIG 9

FIG 10

FIG 11

FIG 12

FIG 13

FIG 14

FIG 15

FIG 16

FIG 17

FIG 19

FIG 18

FIG 20

FIG. 21.

FIG. 22.

0051364

5/5